Europäisches Patentamt

**European Patent Office**

Office européen des brevets

(11) Veröffentlichungsnummer: **0 172 837**
**B1**

(12) # EUROPÄISCHE PATENTSCHRIFT

(45) Veröffentlichungstag der Patentschrift:
**26.10.88**

(51) Int. Cl.⁴: **B 29 C 45/42**, B 29 C 39/36

(21) Anmeldenummer: **85900624.9**

(22) Anmeldetag: **12.02.85**

(86) Internationale Anmeldenummer:
**PCT/CH 85/00024**

(87) Internationale Veröffentlichungsnummer:
**WO 85/03668 (29.08.85** Gazette 85/19)

(54) **EINRICHTUNG ZUR WERKSTÜCK-ENTNAHME AUS DER GIESSFORM EINER SPRITZGIESS- ODER DRUCKGIESSMASCHINE.**

(30) Priorität: **15.02.84 CH 723/84**

(43) Veröffentlichungstag der Anmeldung:
**05.03.86 Patentblatt 86/10**

(45) Bekanntmachung des Hinweises auf die Patenterteilung:
**26.10.88 Patentblatt 88/43**

(84) Benannte Vertragsstaaten:
**AT DE FR GB**

(56) Entgegenhaltungen:
**EP - A - 0 083 766**
**DE - A - 2 048 953**
**DE - A - 2 941 040**
**FR - A - 2 297 719**
**US - A - 4 204 824**

(73) Patentinhaber: **ZINGEL, Heinz, Zimmerberg 24,**
**CH-8222 Beringen (CH)**

(72) Erfinder: **ZINGEL, Heinz, Zimmerberg 24,**
**CH-8222 Beringen (CH)**

(74) Vertreter: **Petschner, Goetz, Patentanwaltsbüro G.**
**Petschner Seidengasse 18, CH-8001 Zürich (CH)**

ACTORUM AG

**Beschreibung**

Die vorliegende Erfindung betrifft eine Einrichtung zur Werkstückentnahme aus der Giessform einer, insbesondere Kunststoff verarbeitenden Spritzgiess- oder Druckgiessmaschine, mit einem ein Greifersystem umfassenden Handhabungsgerät, wobei das mit einem Schlitten verbundene Greifersystem zyklisch in den Entnahmebereich des Werkstückes bewegbar ist und wobei die Auf- und Abbewegung des Schlittens über Getriebemittel erfolgt, die von der beweglichen Formplatte her betätigt werden.

Mit der notwendigen Rationalisierung auch im Bereich der insbesondere Kunststoff verarbeitenden Spritzgiess- oder Druckgiessmaschinen wurde es üblich, die Gussteile automatisch der Maschine zu entnehmen und weiterzugeben. Hierfür werden sogenannte Handhabungsgeräte bzw. Industrieroboter verwendet und der betreffenden Maschine zugeordnet, deren Greifermittel nach dem Öffnen der Formträgerplatten der Maschine in den Entnahmebereich zwischen den beiden Formhälften hineingeführt werden, um dort das Gussteil aufzunehmen und nach aussen zu einem Transportband oder Stapelort o.dgl. zu führen. Nach diesem Entnahmevorgang werden dann wieder beide Formträgerplatten bzw. die beiden Formhälften geschlossen, worauf sich der Arbeitszyklus der Maschine wiederholen kann.

Trotz einer solchen Automation besteht aber weiterhin ein relativ grosser Zeitaufwand für die Entnahme der Gussteile, so dass sich so der Arbeitszyklus der Maschine nicht verkürzen lässt.

Zwar ist bei einer Anordnung gemäss Europäischer Patentanmeldung 0 083 766 vorgesehen, ein mit einem Schlitten verbundenes Greifersystem zyklisch in den Entnahmebereich des Werkstückes zu bringen, wobei die Auf- und Abbewegung des Schlittens über Getriebemittel erfolgt, die von der beweglichen Formplatte her betätigt werden, was aber immer noch ein freies Wegbringen der entnommenen Formteile behindert.

Es ist somit Aufgabe der vorliegenden Erfindung, eine Einrichtung zur Werkstückentnahme aus der Giessform einer, insbesondere Kunststoff verarbeitenden Spritzgiess- oder Druckgiessmaschine zu schaffen, welche gestattet, unter Wahrung der Vorteile der Verwendung eines Handhabungsgerätes, die Entnahmezeit zu verkürzen und somit den Arbeitsrhythmus der Maschine zu erhöhen.

Dies wird nun erfindungsgemäss dadurch erreicht, dass das, das Greifersystem umfassende Handhabungsgerät in Abhängigkeit des Arbeitszyklus der Maschine an den Führungsschlitten der Zwangssteuervorrichtung über Kopplungsmittel ankoppelbar ist, wofür das Handhabungsgerät auf einem Stellschlitten aufsitzt, der quer zur Stellrichtung der Zwangssteuervorrichtung bewegbar ist und wobei die Kopplungsmittel zwischen dem Führungsschlitten und dem Greifersystem des Handhabungsgerätes pneumatisch, hydraulisch oder elektromagnetisch betätigbare Klinkenmittel umfassen.

Durch diese Massnahmen lässt sich zunächst eine synchrone Folgebewegung am Greifersystem relativ zur Öffnungs- bzw. Schliessbewegung der Formträgerplatten der Maschine erreichen, womit die Entnahmezeit wesentlich verkürzt werden kann, indem eine Überlagerung der Bewegungsabläufe bezüglich der verstellbaren Formträgerplatte bzw. bezüglich des Greifersystems stattfindet. Da zudem die Kopplung des Greifersystems an den Führungsschlitten der Zwangssteuerung nur während der Öffnungs- und Schliessphase an den Formträgerplatten der Maschine besteht, kann das Handhabungsgerät in der Folgezeit und ohne Behinderung des weiteren Funktionsablaufes an der Maschine seine weiteren Bewegungsabläufe für ein Gussteiles und das Einnehmen seiner kopplungsbereiten Ausgangslage durchführen.

Dies alles wird erreicht bei einem nun sehr einfachen und funktionssicheren Aufbau der Einrichtung.

Ein grosser Freiheitsgrad des Handhabungsgerätes wird dabei dann erreicht, wenn der Schlitten des Handhabungsgerätes quer auf einer Schlittenführung aufsitzt, der mit der maschinenfesten Formträgerplatte fest verbunden ist.

Bei einer solchen Anordnung kann die Auf- und Abbewegung des Schlittens von einem, durch die Getriebeanordnung folgegesteuerten Motorantrieb her erfolgen. Dadurch wird zudem die Bewegungskraft für den Führungsschlitten praktisch vollständig vom Motorantrieb aufgebracht und die Getriebeanordnung der Zwangssteuervorrichtung entsprechend entlastet, wobei letztere aber bei einer Störung am Motorantrieb in der Lage ist, den Führungsschlitten und somit das Greifersystem des Handhabungsgerätes in Folgebewegung der sich schliessenden Formträgerplatten aus deren Bereich heraus zu bewegen. Damit sind alle notwendigen Sicherheitsvorkehrungen getroffen.

Eine zweckmässige Ausgestaltung der erfindungsgemässen Einrichtung besteht dabei, wenn der folgegesteuerte Motorantrieb jener des Handhabungsgerätes ist und wenn die Folgesteuerung des Motorantriebes durch eine, mit der Getriebeanordnung wirkungsverbundene Rotationsmesseinrichtung o.dgl. erfolgt.

Ferner wird ein einfacher, funktionssicherer Aufbau gewährleistet, wenn die Getriebeanordnung eine mit der verstellbaren Formträgerplatte der Maschine fest verbundene Spindelmutter umfasst, in welcher eine Spindel geführt ist, die über Getriebemittel den Führungsschlitten verstellt und die mit der Folgesteuerung wirkungsverbunden ist, wobei dann zweckmässig die Getriebemittel einen Zahnstangentrieb umfassen, dessen Zahnstange mit dem Führungsschlitten fest verbunden ist.

Die meisten Spritzgiess- oder Druckgiessmaschinen gestatten eine vorteilhafte Ausgestaltung der erfindungsgemässen Einrichtung derart, dass der Führungsschlitten vertikal verschiebbar an der Zwangssteuervorrichtung abgestützt ist.

Bei einer anderen, bevorzugten Ausführungs-

form kann der Führungsschlitten an vertikalen Führungen über Rollmittel verkantungsfrei geführt sein, wobei dann die Verstellanordnung eine an der verstellbaren Formträgerplatte über ein Gelenk abgestützte Stellstange umfasst, die an ihrem anderen Ende über einen weiteren Schwenkhebel an einer Welle drehfest angreift, die in horizontaler Lage am Maschinenrahmen abgestützt und mit dem einen Ende eines Kolben-Zylinder-Systems drehfest verbunden ist, dessen anderes Ende am Führungsschlitten angreift.

Diese Massnahmen gestatten eine Verstellanordnung, die eine hochpräzise, wartungsarme Folgebewegung des Führungsschlittens in Abhängigkeit der Verstellung der Formträgerplatte erlaubt.

Beispielsweise Ausführungsformen des Erfindungsgegenstandes sind nachfolgend anhand der Zeichnung näher erläutert. Es zeigen:

Fig. 1 in schaubildartiger Darstellung, in Teilansicht die erfindungsgemässe Einrichtung zur Werkstückentnahme aus der Giessform einer, insbesondere Kunststoff verarbeitenden Spritzgiess- oder Druckgiessmaschine, mit einem ein Greifersystem umfassenden Handhabungsgerät;

Fig. 2 die erfindungsgemässe Einrichtung in einer stirnseitigen Ansicht der Maschine mit einem Teilschnitt entlang der Schnittlinie II–II in Fig. 3;

Fig. 3 die Einrichtung gemäss Fig. 2 in einer Frontansicht der Maschine, teilweise im Schnitt;

Fig. 4 einen Schnitt entlang der Schnittlinie IV–IV in Fig. 3;

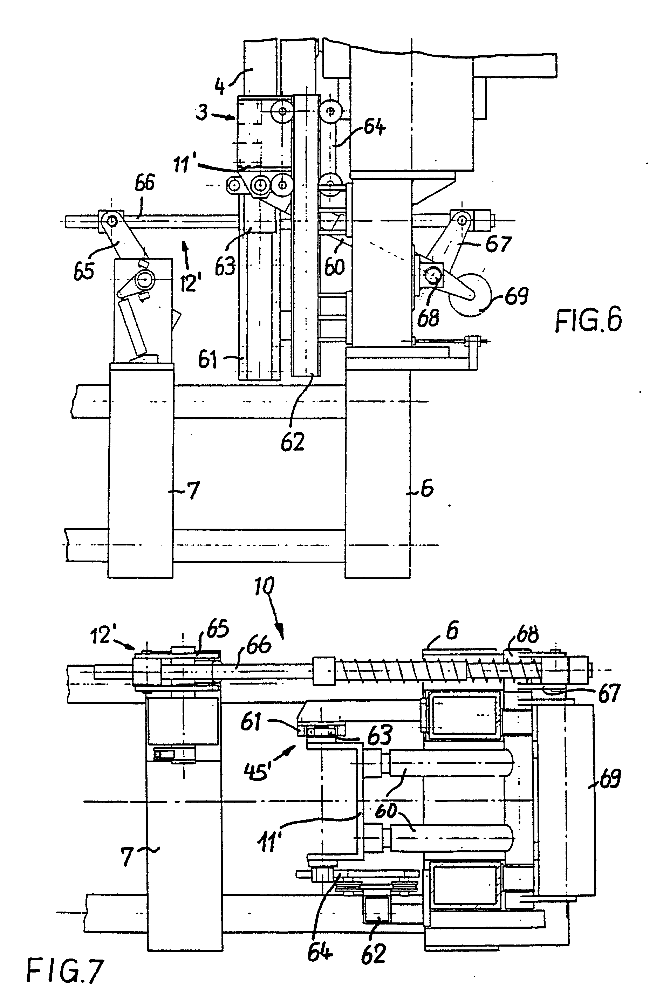

Fig. 5 einen Schnitt entlang der Schnittlinie V–V in Fig. 3;

Fig. 6 eine Ausführungsvariante der erfindungsgemässen Anordnung in Seitenansicht; und

Fig. 7 die Anordnung gemäss Fig. 6 in Draufsicht.

In den Figuren der Zeichnung ist eine Kunststoff-Spritzgiessmaschine 1 durch strichpunktierte Linien des Maschinenbereiches mit der maschinenfesten Formträgerplatte 6 und der verstellbaren Formträgerplatte 7 teildargestellt, wobei eine solche Maschine im übrigen als bekannt vorausgesetzt wird. Insbesondere ist bekannt, dass die verstellbare Formträgerplatte 7 einen gesteuerten Hub gemäss Pfeil 7' ausführt, um die von den Platten 6 und 7 getragenen Formwerkzeughälften 8 und 8' zu schliessen bzw. für die Entnahme des gegossenen Werkstückes 9 zu öffnen. Die hier nicht näher gezeigten Antriebsmittel für die Bewegung der verstellbaren Formträgerplatte 7 werden in üblicher Weise von der Steuereinheit 30 der Maschine angesteuert.

Für die erfindungsgemässe Entnahme des fertigen Gussteiles 9 automatisch und in Abhängigkeit des Arbeitszyklus der Maschine ist zunächst ein an sich bekanntes Handhabungsgerät 2 vorgesehen, das hier einen Knickarm 4 umfasst, der an seinem freien Ende Greifermittel 3 trägt. Die Greifermittel 3, welche hier als Vakuumsauger 3'

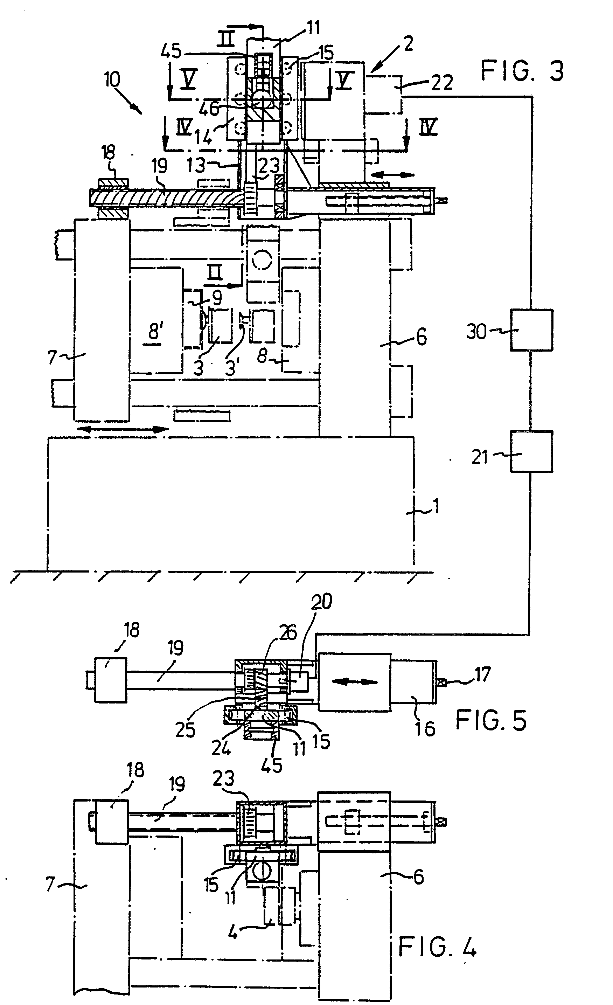

(Fig. 3) dargestellt sind, können selbstverständlich auch mechanische Greifer o.dgl. sein, ebenso, wie das Handhabungsgerät selbst von unterschiedlichster Bauart sein kann.

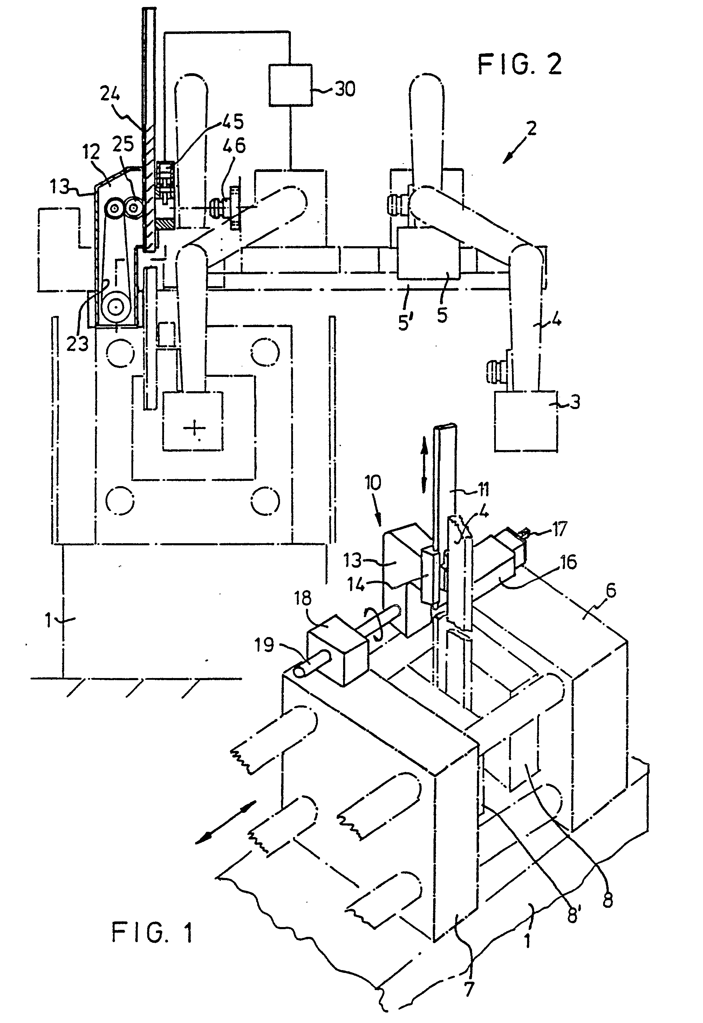

Wie insbesondere Fig. 2 erkennen lässt, sitzt das Handhabungsgerät 2 mit einem Querschlitten 5 auf einer Schlittenführungsbahn 5' auf, die quer zur Schliessrichtung 7' der beweglichen Formträgerplatte 7 auf der maschinenfesten Formträgerplatte 6 montiert ist. Die Verschiebung des den Knickarm 4 und die Greifermittel 3 tragenden Querschlittens 5 erfolgt über nicht näher gezeigte Stellmittel, die ebenfalls von der Steuereinheit 30 der Maschine angesteuert werden. Letztere steuert zudem den Motorantrieb 22 für den Knickarm 4 des Handhabungsgerätes 2. Weiter sind nicht näher gezeigte Antriebsmittel vorgesehen, welche die Greifermittel 3 weitere Vorschub- und Kippbewegungen zur Aufnahme der Gussteile und deren Absetzen ausführen lassen. Dies bedarf aber keiner näheren Erläuterungen, da dies als bekannt gelten kann und hier nicht erfindungswesentlich ist.

Das vorgenannte Greifersystem 3, 4 ist nun in Abhängigkeit des Arbeitszyklus der Maschine 1 an einen Führungsschlitten 11 einer Zwangssteuervorrichtung 10 ankoppelbar, durch welchen Schlitten das Greifersystem zyklisch in den Entnahmebereich des Werkstückes 9 bewegt werden kann, wie dies insbesondere die Fig. 2 und 3 erkennen lassen. Hierfür ist zunächst der Führungsschlitten 11 an einem Getriebegehäuse 13 an Führungsrollen 15 vertikal verschiebbar abgestützt.

Es sei an dieser Stelle ausdrücklich erwähnt, dass es konstruktiv durchaus notwendig sein kann und auch möglich ist, den Führungsschlitten 11 auch horizontal verschiebbar zu machen, um dann das angekoppelte Greifersystem nicht von oben sondern seitlich in den Entnahmebereich des Gussteiles zwischen den Formhälften 8 und 8' zu bringen.

Für die Hin- und Herbewegung des Schlittens 11 ist nun einerseits eine durch die Schliess- und Öffnungsbewegung der verstellbaren Formträgerplatte 7 der Maschine betätigbare Getriebeanordnung 12 und andrerseits ein von dieser Getriebeanordnung 12 folgegesteuerter Motorantrieb vorgesehen. Hierbei kann letzterer ein Fremdaggregat oder, wie hier und zweckmässigerweise der Motorantrieb 22 für den Knickarm 4 des Handhabungsgerätes 2 sein, wie das nachfolgend noch näher beschrieben ist.

Die Getriebeanordnung 12 der Zwangssteuervorrichtung 10 umfasst zunächst eine mit der verstellbaren Formträgerplatte 7 der Maschine fest verbundene Spindelmutter 18, in welcher eine Spindel 19 geführt ist, die über weitere Getriebemittel 23–26 den Führungsschlitten verstellt. Diese weiteren Getriebemittel sind hier zunächst ein Zahnstangentrieb 24, 25, dessen Zahnstange 24 mit dem Führungsschlitten 11 fest verbunden ist. Das Zahnstangenritzel 25 steht dann über ein beispielsweise Schrägzahnrad 26 und über einen Riemen- oder Kettentrieb 23 mit der Spindel 19 in Antriebsverbindung.

Wie nun ohne weiteres erkennbar, bewirkt ein Verschieben der verstellbaren Formträgerplatte 7 in Öffnungsrichtung eine Spindeldrehung und damit eine dem Übersetzungsverhältnis der Getriebeanordnung 12 der Zwangssteuervorrichtung 10 entsprechende Abwärtsbewegung des Schlittens 11, natürlich auch vice versa.

Ist dabei der Knickarm 4 mit den Greifermitteln 3 des Greifersystems des Handhabungsgerätes 2 am Schlitten 11 angekoppelt, gelangen so die Greifermittel 3 in Abhängigkeit der Öffnungsbewegung der Formwerkzeughälften 8 und 8' in den Entnahmebereich des Werkstückes 9 und vice versa.

Die Kopplung zwischen dem Führungsschlitten 11 und dem Greifersystem 3, 4 des Handhabungsgerätes 2 erfolgt hier über pneumatisch, hydraulisch oder elektromagnetisch betätigbare Klinkenmittel 45 vorzugsweise am Führungsschlitten 11, in welche ein Kopplungszapfen 46 am Knickarm 4 im Bereich der Greifermittel 3 des Handhabungsgerätes 2 eingreifen kann, wie das insbesondere Fig. 2 zeigt. Selbstverständlich erfolgt dabei die Betätigung der Klinkenmittel 45 wieder über die Steuereinheit 30 der Maschine.

Wie bereits erwähnt, steuert die genannte Getriebeanordnung 12 der Zwangssteuervorrichtung einen Motorantrieb in Folge, um die Getriebeanordnung 12 bezüglich der Betätigung des Führungsschlittens samt angekoppeltem Greifersystem zu entlasten, wobei dieser folgegesteuerte Motorantrieb der Betätigungsmotor 22 des Handhabungsgerätes 2 für das Greifersystem 3, 4 ist. Diese Folgesteuerung umfasst hier eine mit der Getriebeanordnung 12 wirkungsverbundene Rotationsmesseinrichtung 20 oder dergleichen, deren Drehwinkelsignale über eine Regeleinrichtung 21 und gegebenenfalls über die Steuereinheit 30 der Maschine geführt und zur Folgesteuerung des Handling-Motors 22 herangezogen werden.

Wie ohne weiteres erkennbar, gestattet diese erfindungsgemässe Konzeption eine praktisch verschleissfreie Folgesteuerung durch die Getriebeanordnung 12 der Zwangssteuervorrichtung 10 bei optimaler Sicherheit der Anordnung, indem diese Getriebeanordnung 12 selbst dann die Stellfunktionen am Führungsschlitten 11 übernimmt, wenn sich am folgegesteuerten Aggregat eine Funktionsstörung einstellt.

Die vorbeschriebene Zwangssteuervorrichtung 10 stützt sich, wie die Figuren deutlich erkennen lassen, auf einer relativ zur maschinenfesten Formträgerplatte 6 verstellbaren Konsole 16 ab, welche Verstellung mittels einer Verstellspindel 17 erfolgt. Diese Massnahmen gestatten, den Führungsschlitten 11 auf den durch unterschiedlich dicke Formwerkzeughälften wechselnden Entnahmebereich einzustellen. Aus dem Vorstehenden ergibt sich somit eine universell anwendbare Einrichtung zur Werkstückentnahme aus der Giessform einer, insbesondere Kunststoff verarbeitenden Spritzgiess- oder Druckgiessmaschine, welche in der Lage ist, sämtliche vorerwähnten Anforderungen zu erfüllen. Insbesondere gestattet die Überlagerung der Bewegungen von verstellbarer Formträgerplatte und Greifersystem eine wesentliche Verkürzung der Entnahmezeit. Durch die Folgesteuerung des Motorantriebes wird zudem die Bewegungskraft für den Führungsschlitten praktisch vollständig vom Motorantrieb aufgebracht und die Getriebeanordnung der Zwangssteuervorrichtung entsprechend entlastet, wobei letztere aber bei einer Störung am Motorantrieb in der Lage ist, den Führungsschlitten und somit das Greifersystem des Handhabungsgerätes in Folgebewegung der sich schliessenden Formträgerplatten aus deren Bereich heraus zu bewegen. Weiter bleibt die universelle Bewegungsfreiheit des gewählten Handhabungsgerätes voll erhalten.

Selbstverständlich sind hierbei im Rahmen von Modifikationen der vorbeschriebenen Einrichtung eine Reihe, über die vorbeschriebenen Beispiele hinausgehende Ausführungsvarianten denkbar, ohne dass dabei der Erfindungsgedanke verlassen würde. Insbesondere lässt sich die erfindungsgemässe Einrichtung an sich an verschiedensten Maschinen anwenden, soweit dort ein Öffnungshub stattfindet, um einen Entnahmebereich freizugeben. Entsprechend dem dann gegebenen Raumbedarf kann der Führungsschlitten der Zwangssteuervorrichtung neben seiner möglichen Vertikal- oder Horizontalverschiebung auch eine Anordnung mit geneigter Verschiebung aufweisen. Weiter ist der Aufbau der Getriebeanordnung der Zwangssteuervorrichtung beliebig wählbar. Ebenso sind auch andere Kopplungsmittel zwischen Führungsschlitten und Handhabungsgerät denkbar.

Bei einer Ausführungsvariante der Spritzgiessmaschine erfolgt die Zwangssteuerung über einen gabelförmigen Führungsschlitten 11' welcher mit seiner Klinke 45', die ein hydraulisch, pneumatisch oder elektromagnetisch gesteuerter Bolzen sein kann, in eine Mitnahmebohrung am temporär in die Gabel 11' einsitzender Knickarm 4 bzw. dessen Greifermittel 3 des Handhabungssystems eingreift.

Hierbei ist die Gabel bzw. der gabelförmige Führungsschlitten 11' an vertikalen Führungen 61 und 62 des Maschinengestells 1 über Roll-Lagermittel 63 bzw. über einen Rollwagen 64 verkantungsfrei vertikalgeführt.

Die Zwangssteuervorrichtung 12' umfasst dabei neben dem Führungsschlitten 11' eine an der verstellbaren Formträgerplatte 7 der Maschine über ein Gelenk 65 abgestützte Stellstange 66, welche an ihrem anderen Ende über einen weiteren Schwenkhebel 67 an einer Welle 68 drehfest angreift, welche Welle 68 in horizontaler Lage am Maschinenrahmen drehbar abgestützt ist und an welcher das eine Ende eines Kolben-Zylinder-Systems 60 drehfest abgestützt ist. Das andere Ende des Kolben-Zylinder-Systems 60 greift am Führungsschlitten 11' an.

Diese Massnahmen ergeben eine Verstellanordnung 12', welche eine hochpräzise, wartungsarme Folgebewegung des Führungsschlittens 11'

und damit auch der Greifermittel 3 in Abhängigkeit der Verstellung der Formträgerplatte 7 erlaubt. Die Rückstellbewegung des Führungsschlittens 11′ nach oben kann dabei noch von einem Gegengewicht 69 unterstützt sein.

## Patentansprüche

1. Einrichtung zur Werkstückentnahme aus der Giessform einer, insbesondere Kunststoff verarbeitenden Spritzgiess- oder Druckgiessmaschine, mit einem ein Greifersystem (3, 4) umfassenden Handhabungsgerät (2), wobei das mit einem Schlitten (11) verbundene Greifersystem zyklisch in den Entnahmebereich des Werkstükkes bewegbar ist, wobei die Auf- und Abbewegung des Schlittens über Getriebemittel (12) erfolgt, die von der beweglichen Formplatte (7) her betätigt werden, dadurch gekennzeichnet, dass das, das Greifersystem (3, 4) umfassende Handhabungsgerät (2) in Abhängigkeit des Arbeitszyklus der Maschine an den Führungsschlitten (11) der Zwangssteuervorrichtung (12) über Kopplungsmittel (45, 46) ankoppelbar ist, wofür das Handhabungsgerät (2) auf einem Stellschlitten (5) aufsitzt, der quer zur Stellrichtung der Zwangssteuervorrichtung (10) bewegbar ist und wobei die Kopplungsmittel (45, 46) zwischen dem Führungsschlitten (11) und dem Greifersystem (3, 4) des Handhabungsgerätes (2) pneumatisch, hydraulisch oder elektromagnetisch betätigbare Klinkenmittel (45) umfassen.

2. Einrichtung nach Anspruch 1, dadurch gekennzeichnet, dass der Stellschlitten (5) des Handhabungsgerätes (2) auf einer Schlittenführung (5′) aufsitzt, der mit der maschinenfesten Formträgerplatte (6) fest verbunden ist.

3. Einrichtung nach Anspruch 1, dadurch gekennzeichnet, dass die Auf- und Abbewegung des Führungsschlittens (11) von einem, durch die Getriebeanordnung (12) folgegesteuerten Motorantrieb her erfolgt.

4. Einrichtung nach Anspruch 1, dadurch gekennzeichnet, dass der folgegesteuerte Motorantrieb jener des Handhabungsgerätes (2) ist.

5. Einrichtung nach Anspruch 1, dadurch gekennzeichnet, dass die Folgesteuerung des Motorantriebes durch eine, mit der Getriebeanordnung (12) wirkungsverbundene Rotationsmesseinrichtung (20) o.dgl. erfolgt.

6. Einrichtung nach Anspruch 1, dadurch gekennzeichnet, dass die Getriebeanordnung (12) eine mit der verstellbaren Formträgerplatte (7) der Maschine fest verbundene Spindelmutter (18) umfasst, in welcher eine Spindel (19) geführt ist, die über Getriebemittel (23–26) den Führungsschlitten (11) verstellt und die mit der Folgesteuerung wirkungsverbunden ist.

7. Einrichtung nach Anspruch 5, dadurch gekennzeichnet, dass die Getriebemittel (23–26) einen Zahnstangentrieb (24–25) umfassen, dessen Zahnstange (24) mit dem Führungsschlitten (11) fest verbunden ist.

8. Einrichtung nach Anspruch 1, dadurch gekennzeichnet, dass der Führungsschlitten (11) vertikal verschiebbar an der Zwangssteuervorrichtung (10) abgestützt ist.

9. Einrichtung nach Anspruch 1 oder 8, dadurch gekennzeichnet, dass der Führungsschlitten (11′) an vertikalen Führungen (61, 62) über Rollenmittel (63 bzw. 64) verkantungsfrei geführt ist, wobei die Verstellanordnung (12′) eine an der verstellbaren Formträgerplatte (7) über ein Gelenk (65) abgestützte Stellstange (66) umfasst, die an ihrem anderen Ende über einen weiteren Schwenkhebel (67) an einer Welle (68) drehfest angreift, die mit dem einen Ende eines Kolben-Zylinder-Systems (60) drehfest verbunden ist, dessen anderes Ende am Führungsschlitten (11′) angreift.

## Claims

1. An installation for removing a work-piece from the mould of an injection moulding machine or die casting machine for moulding synthetic material in particular, comprising a handling apparatus (2) with a gripping system (3, 4); the gripping system, connected by a slide (11), may be cyclically displaced in the area of removal of the work-piece; the reciprocating motion of the slide being carried out by transmission means (12) actuated by the displaceable mould support plate (7), wherein the handling apparatus (2), comprising the gripping system (3, 4), may be coupled in relation to the working cycle of the machine to the guiding slide (11) of the forced control unit (10) by means of coupling devices (45, 46), for which the handling apparatus (2) is mounted on a displacing slide (5) which is displaceable at right angles to the direction of displacement of the forced control unit (10), and, wherewith, the coupling devices (45, 46), between the guiding slide (11) and the gripping system (3, 4) of the handling apparatus (2), comprise detent devices (45), which may be pneumatically, hydraulically or electromagnetically operable.

2. An installation as defined in claim 1, wherein the displacement slide (5) of the handling apparatus (2) is mounted on a slide conveyer (5′), which is fastened to the mould support plate (6) firmly attached to the machine.

3. An installation as defined in claim 1, wherein the reciprocating motion ot the guiding slide (11) is carried out by a follow-up-controlled motor drive by means of the transmission means (12).

4. An installation as defined in claim 1, wherein the follow-up-controlled motor drive is that of the handling apparatus (2).

5. An installation as defined in claim 1, wherein the follow-up control of the motor drive takes place by a rotation measuring device (20) or the like, which is in operative connection with the transmission means (12).

6. An installation as defined in claim 1, wherein the transmission means (12) comprises a spindle nut (18), connected securely to the displaceable mould support plate (7) of the machine, and in which a spindle is guided that displaces the guiding slide (11) by way of the transmission means (23–26), and which is in operative connection with the follow-up control.

7. An installation as defined in claim 5, wherein the transmission means (23–26) comprise a rack-and-pinion gear (24–25) of which the rack is firmly connected to the guiding slide (11).

8. An installation as defined in claim 1, wherein the guiding slide (11) is supported vertically displaced on the forced control unit (10).

9. An installation as defined in claim 1 or 8, wherein the guiding slide (11') is guided cant-free on vertical guides (61, 62) by way of rollers (63 and 64); the displacement device (12') comprises, thereby, a displacement rod (66) which is supported on the displaceable mould support plate (7) by a joint (65), the other end of said displacement rod engaging pivotally attached on a shaft (68) by means of a further rocking lever (67); said shaft being connected able to rotate by the one end of a piston-cylinder-system (60), the other end of which engages on the guiding slide (11').

**Revendications**

1. Installation pour retirer une pièce à usiner d'un moule d'une presse d'injection ou d'une machine à couler sous pression, utilisées notamment pour le traitement de matières plastiques, qui comprend un appareil de manutention (2) comportant un système de préhension (3, 4), ce système de préhension, relié à un chariot (11), pouvant se déplacer d'une manière cyclique dans la zone d'enlèvement de la pièce à usiner et le déplacement du chariot vers le haut et vers le bas étant assuré par l'intermédiaire de dispositifs à engrenage (12) qui sont mis en action à partir de la plaque de moule (7) mobile, caractérisé en ce que l'appareil de manutention (2) qui comprend le système de préhension (3, 4) peut être accouplé, en fonction du cycle de travail de la machine, par l'intermédiaire de dispositifs d'accouplement (45, 46), au chariot de guidage (11) du dispositif (12) de commande forcée et que, pour cela, l'appareil de manutention (2) est monté sur un chariot (5) de mise en place qui peut se déplacer transversalement par rapport à la direction de déplacement du dispositif (10) de commande forcée, les dispositifs d'accouplement (45, 46) entre le chariot de guidage (11) et le système de préhension (3, 4) de l'appareil de manutention (2) comportant des appareils à cliquet (45) à commande pneumatique, hydraulique ou électromagnétique.

2. Installation selon la revendication 1, caractérisée en ce que le chariot (5) de mise en place de l'appareil de manutention (2) est monté sur un dispositif de guidage (5') du chariot qui est solidaire de la plaque de support (6) du moule reliée à la machine.

3. Installation selon la revendication 1, caractérisée en ce que le déplacement vers le haut et vers le bas du chariot de guidage (11) est assuré par un moteur commandé d'une manière séquentielle par le dispositif à engrenages (12).

4. Installation selon la revendication 1, caractérisée en ce que le dispositif de moteur commandé d'une manière séquentielle est celui de l'appareil de manutention (2).

5. Installation selon la revendication 1, caractérisée en ce que la commande séquentielle de l'entraînement par moteur s'effectue au moyen d'un dispositif (20) de mesure de rotation ou d'un dispositif analogue coopérant avec le dispositif à engrenages (12).

6. Installation selon la revendication 1, caractérisée en ce que le dispositif à engrenages (12) comprend un écrou de broche (18) qui est solidaire de la plaque mobile (7) de support du moule de la machine et dans lequel est guidée une broche (19) qui déplace le chariot de guidage (11) par l'intermédiaire de dispositifs à engrenages (23–26) et qui coopère avec le dispositif de commande séquentielle.

7. Installation selon la revendication 5, caractérisée en ce que les dispositifs à engrenage (23–26) comprennent un dispositif d'entraînement à crémaillère (24–25) dont la crémaillère (24) est solidaire du chariot de guidage (11).

8. Installation selon la revendication 1, caractérisée en ce que le chariot de guidage (11) prend appui sur le dispositif de commande à crémaillère (10) pour se déplacer verticalement.

9. Installation selon l'une des revendications 1 ou 8, caractérisée en ce que le chariot de guidage (11') est guidé par des dispositifs de guidage (61, 62) par l'intermédiaire de dispositifs roulants (63 ou 64) sans possibilité de blocage, le dispositif de déplacement (12') comprenant une barre de réglage (66) qui prend appui, par l'intermédiaire d'une articulation (65), sur la plaque mobile (7) de support du moule et qui, à son autre extrémité, agit, par l'intermédiaire d'une autre levier pivotant (67), sans possibilité de rotation relative, sur un arbre (68) qui est relié, sans possibilité de rotation relative, à l'une des extrémités d'un système (60) à cylindre et piston dont l'autre extrémité agit sur le chariot de guidage (11').

FIG. 2

FIG. 1

0 172 837

FIG. 3

FIG. 5

FIG. 4

9

FIG.6

FIG.7